Europäisches Patentamt

European Patent Office

Office européen des brevets

(11) Publication number: **0 511 481 A1**

# EUROPEAN PATENT APPLICATION

(21) Application number: **92104247.9**

(22) Date of filing: **12.03.92**

(51) Int. Cl.5: **B65G 57/18**

(30) Priority: **18.03.91 IT UD910036**

(43) Date of publication of application:
**04.11.92 Bulletin 92/45**

(84) Designated Contracting States:
**BE DE ES FR GB**

(71) Applicant: **S.I.M.A.C S.p.A.**
**Via Udine 91**
**I-33017 Tarcento (Udine)(IT)**

(72) Inventor: **Offoiach, Renzo**
**c/o S.I.M.A.C. S.P.A., Via Udine**
**I-33017 Tarcento (UD)(IT)**

(74) Representative: **D'Agostini, Giovanni, Dr.**
**D'AGOSTINI ORGANIZZAZIONE n. 17 via**
**G.Giusti**
**I-33100 Udine(IT)**

(54) **Packing method and bars packer with hanging transfer in association with an upsetter, particularly for rolling plants.**

(57) Bars packer plant with hung transfer magnets, particularly for rolling plants, wherein it is also possible to pack bar layers differentiated in number (n,n-1) which have to be superposed upright and reverse from a supply line of layers in differentiated number (1), characterized in that the plant has the following combination of characteristics:

- it has a pocket for receiving the bars to be packed (3) adjacent immediately downwards said supply line (1);
- it has a linear system of hung transfer magnetic means (46) which are movable over the supply line in order to receive bar layers (n,n-1) in a pick-up area in the supply line (1,2),
- it is provided a lifter means (2) under the supply system (1), and under said magnetic transfer means which are hung in their respective pick-up areas, in order to lift one attached bar layer (n,n-1):
  - over said supply line (1) and
  - under said hung magnetic means (46);
- it has a transfer system with rotatable and tipping magnetic means having a rotational transfer arm (5-56):
  - from said pick-up position over said lifter 2;
  - to below said hung transfer means (46).

FIG. 1

The present invention concerns a packing method and its respective bars packer with hanging transfer in association with an upsetter, particularly for rolling plants, wherein it is also possible to pack bar layers differentiated in number which have to be superposed upright and reverse, as e.g. angle bars.

Packing plants having transfers equipped with upsetting means having a rotating arm which rotates substantially for 180° to and from, e.g. angle bars (L-shaped profiles) from a supply device of alternating n and n-1 bar layers, see for example IT83349A/88 (SIMAC), have been in use for years.

These solutions are complex and cumbersome and further present the drawback of lying on the supply line between the feeder of the n and n-1 layers and the pack formation pocket which is intended to receive these overlapped layers alternatively upright and reverse, the transfer and alternating upset being carried out by said rotating transfer arm.

Packing plants with hanging transfer causing less hindrance on the supply line, are known also from patents of the same applicant:

- IT83471/88 (SIMAC) discloses an oscillating pendulum hanging transfer device with non-rotatable pick-up bar layers magnets associated to an upwards upsetter transfer, in order to form a double bar layer n and n-1 by means of an intermediate transfer that positions the double layer under the oscillating transfer for the final transfer to the packing.
- IT83488A/88 (SIMAC) explains a hung oscillating transfer, or on trolley, with a couple of fixed non-rotatable magnets, then necessarily associated to an upwards upsetter in order to pick-up alternatively a first n bar layer and the other a second n-1 bar layer, etc..
- IT83302A/89 (SIMAC) concerning a method and plant for packing profiles with the aid of a transfer having two hung non-rotatable magnets which are however always associated to an auxiliary underlying upsetting means.

  The use of these auxiliary upsetting means is complex and expensive.

The object of the present invention is to obviate said drawbacks.

A further object is also that of allowing through the same plant the formation of bar packs without any alternating upsetting of the layers, and also of forming bar bundles in bulk without the aid of intermediate transfers, through simple dropping into a pocket, this being very convenient for example for the formation of round bar bundles and the like by the same plant, without need of any modifications of the same.

This and other objects are reached through the present invention as claimed, by means of a bars packer plant with hung transfer magnets, particularly for rolling plants, wherein it is also possible to pack bar layers differentiated in number (n,n-1) which have to be superposed upright and reverse from a supply line of layers differentiated in number, characterized in that the plant presents the following combination of characteristics:

- it has a receiving pocket for bars to be packed which is immediately adjacent downwards said supply line;
- it has a linear system of hung magnetic transfer means which are movable above the supply line, in order to receive bar layers (n,n-1) in a pick-up area in the supply line,
- it is provided a lifting means under the supply system, and under said magnetic transfer means which are hung in their respective pick-up areas, in order to lift one attached bar layer (n,n-1):
  • over said supply line and
  • under said hung magnetic means;
- it has a transfer system with rotatable and tipping magnetic means having a rotational transfer arm:
  • from said pick-up position above said lifter;
  • to below said hung transfer means.

Through this solution it is possible either to form bar layers packs alternating upright and reverse, as it is necessary for example for angle bars, or always upright (e.g. flat) or in bulk (e.g. round),

- in the first case by operating through the two transfers having magnetic means;
- in the second case by operating only through the tipping magnetic means with rotatable arm;
- in the third case by operating only through the horizontally supply system by unyoking said magnetic transfer means out of line.

Advantageously, the operative cycle for the formation of bar packs of reverse alternating layers is the following:

• the lifting means consign a first bar layer (n-1), which has been previously made to advance by the supply means over it, to the overhanging hung magnetic transfer means, while the final transfer tipping magnetic means with rotatable arm, deposit a double layer {n + (n-1)} into the pocket;
• the hung magnetic means with the first bar layer attached below (n-1) move upwards, while the final transfer tipping magnetic means with rotatable arm rotate in order to reach a position for the picking-up of a successive bar layer (n) which is made to advance at the same time on the supply line, and during this phase the respective final transfer tipping magnetic means with rotating arm are rotated for 180° in order to be orientated downwards;

- the lifting means go up from below the second bar layer (n), lifting and attaching it under said tipping magnetic means with rotating arm, (then they will go down in order to make a successive first layer (n-1) to advance again;

- said tipping magnetic means with rotating arm, rotate for 180° in order to orientate upwards the received bar layer;

- the hung magnetic means go down and deposit the first layer (n-1) over the second layer (n) on said final transfer tipping magnetic means, thus forming the double layer;

- the hung magnetic means go up again in order to allow the magnetic arm of the tipping magnetic means to rotate and to deposit the thus formed double bar layer, into the pack formation pocket;

  - repetition of the cycle.

In this way, packs of bar layers alternating upright and reverse are formed without times of wait.

Advantageously, said transfer system with tipping rotatable magnetic arms is rotatable completely under said supply line, so as to allow the direct supply in an alternative way of said bars to the adjacent pack formation pocket.

The invention is better understood with the aid of the joined description and drawing given only by way of example, where:

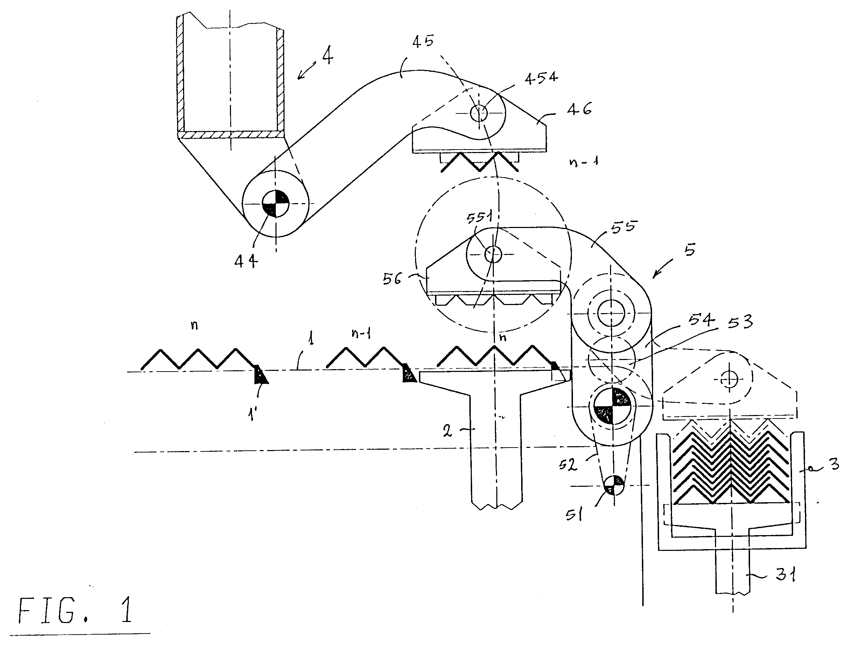

Figure 1 represents a schematic view of the transfer system after the pick-up phase of a first bar layer on the hung magnetic means, while the second magnetic tipping means are waiting to receive the second bar layer from the underlying lifter.

Figure 2 represents a view with the phases from 1 to 6 of the transfer for angle bars by using both magnetic transfers.

Figure 3 represents a view with the phases from 1 to 4 of the transfer for flat bars by using only the transfer with tipping magnetic means and rotating arm.

Figure 4 represents the disposition of the plant for the direct accumulation of round bars or rods in the pack formation pocket, while the other magnetic means remain inactive and placed offline of advancement.

The transfer includes a supply system of bar layers n and n-1 (1) associated to a bar layer lifting device in the pick-up area 2 in order to stop it in its pick-up position under a first hanging transfer 4 that is hung by an arm (45) which is rotatable on the axis 44 and which includes the magnetic means 46 pivoted to its end (454) in order to be lifted and lowered always with their lower magnetic surface of attach for the bar layers orientated downwards horizontally.

Besides these first magnetic transfer means (4,...46), final transfer magnetic means (5) (to a pack formation pocket (3) which includes traditional lowering devices (31), are provided.

Said second transfer means (5) are equipped with a rotatable arm 55 associated to the transmission systems 53-54-52-51, so as to allow a system of magnetic means for the bar layers picking-up (56) which are hung tipping and rotatable (551) at the arm end (55), able to:

- receive bar layers both from below an underlying lifter (2), and from above by said overhanging hung magnetic means (46) and then

- to transfer these bar layers to the pack formation pocket (3);
  or

- to rotate completely under the supply line 1, so as to allow the supply line 1 to supply directly the bars to the pocket through an eventual slide (6).

The mechanism assures that the active face of the tipping magnets (56) always remains horizontal and directed downwards. This can be made through chain internal to the arm, through parallelogram or any other suitable solution.

In the specified case the magnetic means (46) are tipping through a 180° rotation commanded by a gear system 53 interior to a first arm 54 which in turn is made to rotate in order to move under the transmission shaft and chain (51-52) supply line.

Under the latter it is disposed a bar layers lifter that, from a position under the bar layers supply line (1) in differentiated number by means of suitable disappearing stops of the prior art (1'), lifts the layers and brings them into attach either under the magnetic surface of the hung transfer means (46) or under the magnetic surface of said tipping transfer means (56) with rotating arm (5).

From the figures the view of only one magnet can be noted, in fact these can be lined-up in determined number for the picking-up of bars of adequate length.

The movement of the transfers is provided conveniently by means of direct current step motors, but it is apparent that the movements can be realized also by means of hydraulic cylinders or other suitable means.

In Figure 4 it is represented a slide for the direct dropping of the bars into the pocket, but it is apparent that this can be different as from the prior art also for example as the one indicated in the application IT83526A/88 (SIMAC) or any other convenient method.

In the case of bar layers superposed upright and reverse, as in the case of angle bars, the cycle is the following:

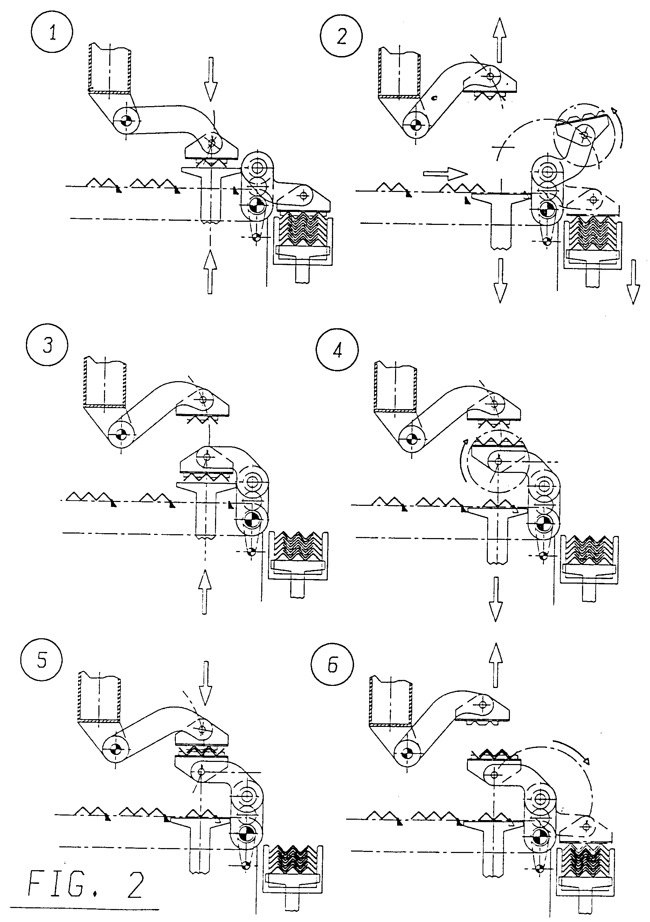

- the lifting means consign a first bar layer (n-1), which has been previously made to advance by the supply means (1) over it, to the overhanging hung magnetic transfer means (46), while the final transfer tipping magnetic means (56) with rotatable arm (5) deposit a double layer {n + (n-1)} into the pocket (phase 1 Fig.2);
- the hung magnetic means (46) with the first bar layer attached below (n-1) move upwards, while the final transfer tipping magnetic means (56) with rotatable arm (5) rotate in order to reach a position for the picking-up of a successive bar layer (n) that at the same time is made to advance on the supply line (1), and during this phase the respective final transfer tipping magnetic means (56) with rotating arm (5) are rotated for 180° in order to be orientated downwards (phase 2 Fig.2);
- the lifting means go up from below the second bar layer (n), lifting and attaching it below said tipping magnetic means (56) with rotating arm (5) (phase 3 Fig.2), (then they will go down in order to allow the advancement of a successive first layer (n-1);
- said tipping magnetic means (56) with rotating arm (5), rotate for 180° in order to orientate upwards the received bar layer (phase 4 Fig.2);
- the hung magnetic means (46) go down and deposit the first layer (n-1) over the second layer (n) on said final transfer tipping magnetic means (56), thus forming the double layer (phase 5 Fig.2);
- the hung magnetic means (46) go up again in order to allow to the magnetic arm (5) of the tipping magnetic means (56) to rotate and to deposit the thus formed double bar layer into the pocket for the pack formation (phase 6 Fig.2);
- repetition of the cycle.

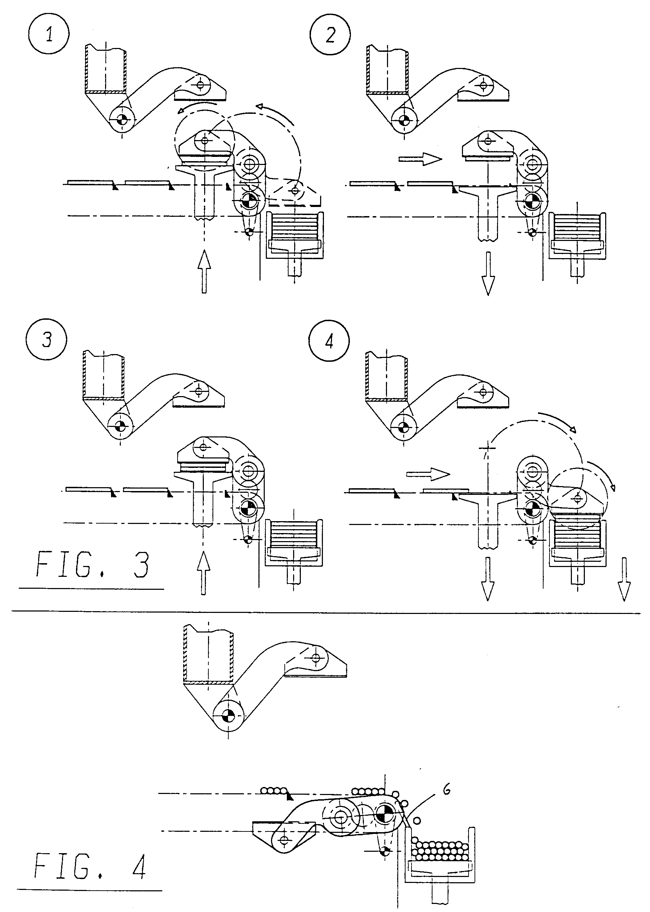

As from Figure 3, by means of the transfer it is also possible to transfer plates through simple pick-up and overlap phases by the sole tipping magnetic transfers of the final transfer (5):
- lifting of the plate layer under the surface of the magnetic means and disengagement (phase 1 of Fig.3);
- advancement of a second plate layer under the magnetic means of the transfer (phase 2 of Fig.3);
- lifting of this second plate layer under the previous layer for the formation of two attached bar layers (phase 3 of Figure 3);
- transfer with 180° rotation of the magnetic means with the magnetic surface of the two bar layers to the pack formation pocket (phase 4 of Figure 3).

## Claims

1. Bars packer plant with hung transfer magnets, particularly for rolling plants, wherein it is also possible to pack bar layers differentiated in number (n,n-1) which have to be superposed upright and reverse from a supply line of layers in differentiated number (1), characterized in that the plant has the following combination of characteristics:
   - it has a pocket for receiving the bars to be packed (3) adjacent immediately downwards said supply line (1);
   - it has a linear system of hung transfer magnetic means (46) which are movable over the supply line in order to receive bar layers (n,n-1) in a pick-up area in the supply line (1,2),
   - it is provided a lifter means (2) under the supply system (1), and under said magnetic transfer means which are hung in their respective pick-up areas, in order to lift one attached bar layer (n,n-1):
     - over said supply line (1) and
     - under said hung magnetic means (46);
   - it has a transfer system with rotatable and tipping magnetic means having a rotational transfer arm (5-56):
     - from said pick-up position over said lifter 2;
     - to below said hung transfer means (46).

2. Bars packing method utilizing a plant according to claim 1, characterized in that it operates according to the following transfer phases for the formation of packs of overlapped alternate bar layers in differentiated and overturned number (n,n-1):
   - said lifting means (2) consign a first bar layer (n-1), which has been previously made to advance by said supply means (1) over it, to said overhanging hung magnetic transfer means (46), while said final transfer tipping magnetic means (56) with rotatable arm (5), deposit a double layer {n + (n-1)} into the pocket of said packer plant (phase 1 Fig.2),
   - said hung magnetic means (46) with the first bar layer attached below (n-1) move upwards, while said final transfer tipping magnetic means (56) with rotatable arm (5) rotate in order to move to the pick-up position of a successive bar layer (n) which is made to advance at the same time on the supply line (1), and during this phase said final transfer tipping magnetic means (56) with rotating arm (5) are rotated for 180° in order to be orientated downwards;

- said lifting means go up from below the second bar layer (n), lifting and attaching it under said tipping magnetic means (56) with rotating arm (5) (phase 3 Fig.2), (then they will go down in order to make a successive first layer to advance again (n-1);
- said tipping magnetic means (56) with rotating arm (5), rotate for 180° in order to orientate upwards the received bar layer;
- said hung magnetic means (46) go down and deposit the first layer (n-1) over the second layer (n) on said final transfer tipping magnetic means (56), thus forming the double layer;
- the hung magnetic means (46) go up again in order to allow to the magnetic arm (5) of the tipping magnetic means (56) to rotate and to deposit the double bar layer thus formed, into said pocket for the pack formation.
  - repetition of the cycle.

3. Plant according to claim 1, characterized in that said transfer system with rotatable tipping magnetic arms is rotatable completely under said supply line, so as to allow the direct supply in an alternative way of said bars to the adjacent pack formation pocket (3).

4. Bars packing method utilizing a plant according to claim 1, characterized in that said formation pocket of bar pack or bundle (3) is placed close to and under the respective ending edge of the plane of bar advancement for operating in an alternative way, besides according to the cycle of claim 2, also through direct dropping of the bars in rolling-action from said supply plane (1) directly into said pack or bundle formation pocket (3).

5. Bars packing method utilizing a plant according to claim 1, characterized in that, for the formation of packs of non-alternating upright and reverse bar layers, :
- said transfer system with hung magnetic means is made inactive;
- the plant is operated through the sole said final transfer tipping magnetic means (56) with rotating arm (5), having their layers pick-up surface orientated downwards, in order to receive from said lifting means (2) two bar layers in successive phases and to transfer said bar layers, with contemporary 180° rotation of said magnetic means and of the respective supporting arms to the pack formation pocket (3).

4

45

454

46

44

551

55

5

56

54 53

52

51

n-1

n

1

1'

2

3

31

a

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | EP-A-0 380 766 (S.I.M.A.C. S.P.A.)<br>* the whole document *<br>--- | 1 | B65G57/18 |
| A | DE-A-1 900 556 (OFFICINE MECCANICHE DANIELI, BUTTRIO)<br>* figure 1 *<br>--- | 1 | |
| A | EP-A-0 009 037 (ELINEAU HUBERT)<br>----- | | |

TECHNICAL FIELDS SEARCHED (Int. Cl.5)

B65G

The present search report has been drawn up for all claims

| Place of search | Date of completion of the search | Examiner |
|---|---|---|
| THE HAGUE | 14 AUGUST 1992 | BEERNAERT J.E. |